Europäisches Patentamt

European Patent Office

Office européen des brevets

(11) Publication number: 0 175 818
A1

# (12) EUROPEAN PATENT APPLICATION

(21) Application number: 84306335.5

(22) Date of filing: 17.09.84

(51) Int. Cl.⁴: **D 04 B 21/20**
//B60R13/06

(43) Date of publication of application:
02.04.86 Bulletin 86/14

(84) Designated Contracting States:
BE DE FR GB IT SE

(71) Applicant: SCHLEGEL IRELAND LIMITED
Dublin Road
Loughrea, Co. Galway(IE)

(72) Inventor: Beck, Frank
4523 Bennett Road
Burlington Ontario L7L 1Y5(CA)

(72) Inventor: Holmes, Dermot
3 Mount Pleasant
Loughrea Co. Galway(IE)

(74) Representative: Carpmael, John William Maurice et al,
CARPMAELS & RANSFORD 43 Bloomsbury Square
London, WC1A 2RA(GB)

(54) Knitted wire carrier with locking grid.

(57) In the manufacture of knitted wire carriers for use as a frame for extruded polymer products, such as vehicle door seals, the shifting of warp threads (15,17,19) laterally along the wefts (3,5,7) is prevented by knitting the warp threads into the wefts so that there is a knitted knot at each junction between a warp thread and a weft. An elastomer weld is then formed at the junction by heating the threads. In one embodiment, the wefts (3,5,7) comprise a wire (1) side-by-side with a polymeric thread (21).

KNITTED WIRE CARRIER WITH LOCKING GRID

This invention relates to a knitted wire carrier with a locking grid.

Knitted wire carriers are well known, and one such carrier is disclosed in U.K.Patent Specification No.1084298. Basically, such carriers comprise a continuous wire formed into a sinuous formation or zig-zag, with substantially parallel limbs interconnected by arcuate regions at each side edge of the zig-zag (thus providing loops) which limbs provide a plurality of wefts, into which are knitted a plurality, usually at least six, warp threads. These threads can be of small gauge wire, or a synthetic resinous filament, or a natural fibre, such as cotton.

Such wire carrier is used by us mainly as a frame for extruded polymer products, such as vehicle door and other seals and the like. Accordingly, during the manufacture of the seals, the carrier has to be passed through an extruder, which requires at least one handling operation beforehand. This means that there is a real tendency for the warp threads to shift laterally on the wefts.

Normally, wire carriers are made by knitting the wire wefts together with the warp threads under uniform warp tension. However, as soon as the warp threads shift laterally, this results in a change in warp tension at the point where the thread shifts and consequently creates in the carrier a non-uniform stress distribution of the warp. This can result in breakage of the warps or non-uniform performance of the seal in which the carrier is incorporated.

We have attempted to solve the problem of lateral warp shifting by forming the adjacent wefts, i.e. each loop,into a propeller or banana shape, but this is difficult to control, and anyhow, has been found to have little controlling effect on lateral warp shifting.

As a further attempt to overcome the above problem, we have run the knitted carrier through a latex bath and then heated it to cure the latex, but the problems with this solution are that it is costly both in latex and in energy consumption, and often results in webs of latex forming windows in the square defined by a pair of adjacent wefts and a pair of adjacent warp threads, which then cause problems in the subsequent extrusion process.

According to the present invention, we provide a knitted wire carrier comprising a wire folded into a zig-zag configuration so as to have a plurality of substantially parallel limbs forming wefts interconnected at alternate ends by arcuate regions which define side edges of the zig-zag, and a plurality of warp threads knitted into the wefts so that there is a knitted knot at each junction between a warp thread and a weft, and wherein the location of each junction is fixed by means of an elastomer weld cr fusion of the wefts to the warp threads, to provide a locking grid within the carrier.

To achieve the welds or fusions, the weft may partly be formed of a polymeric material or coated with a polymeric material which is compatible with the warps, which again may be partly or entirely of a polymeric material, or are preferably coated with a polmeric material. Alternatively, the wefts may comprise two threads in side-by-side relationship, one of which is formed at least with a coating of, or impregnated with, a polymeric material, but which is preferably formed entirely of such a material. It is also envisaged that the warps could be formed of two such materials. The polymeric material may be thermosetting, but preferably is thermoplastic.

In one construction, it is preferred that the wefts are comprised of wire and, alongside the wire, a vinyl coated polyester yarn thread, and that the warp threads are formed of another vinyl coated polyester thread. For example, the weft may be of 300 Denier and the warp threads of 1000 Denier.

To form the welds or fusions, the knitted carrier is subjected to a heating step immediately after the knitting operation. Ideally, a hot air stream is used, but a heated roller or bar or even induction heating of the wire can be used.

It is already known to incorporate heat fusible materials in woven products, for example to assist in the adhesion of another polymeric material to the woven material (see U.S. Patent Specification Nos. 4288482/3 and 2070335).

Furthermore, it is also known to prevent fraying of cut selvages of woven fabric by incorporating thermoplastic strands in the fabric adjacent the cuts, and causing the strands to melt prior to cutting (see U.S. Patent Specification No.3515623).

Also, it has been proposed in U.S. Patent Specification No.3829048 to form a wire fabric of sets of longitudinal strands and cross strands, and to prevent slippage by arranging for one of the sets of strands to be gripped frictionally by the strands of the other set, either by off-setting the strands of one set, or piercing them with the other set, at the strand junctions.

In U.S. Patent Specification No.3904847, there is disclosed a grid-like heating structure for embedding in concrete pavements and the like to melt snow and ice, which is formed of a thermoplastic-coated heating wire formed into a zig-zag formation, the spaced sections of which are interconnected by a plurality of parallel spaced strands of thermoplastic material which are laid over the zig-zag formation, and fused to it. Such a structure is formed by laying out the zig-zag formation on a board, with the aid of pegs, and is of large dimensions commensurate with its use. A knitting step is not disclosed.

None of the above prior art constructions in any way suggests a knitted wire carrier, which has a mechanical interlock formed by knitted knots between weft and warp threads, which can subsequently be passed through an extruder, after the formation of the locking grid in accordance with this invention.

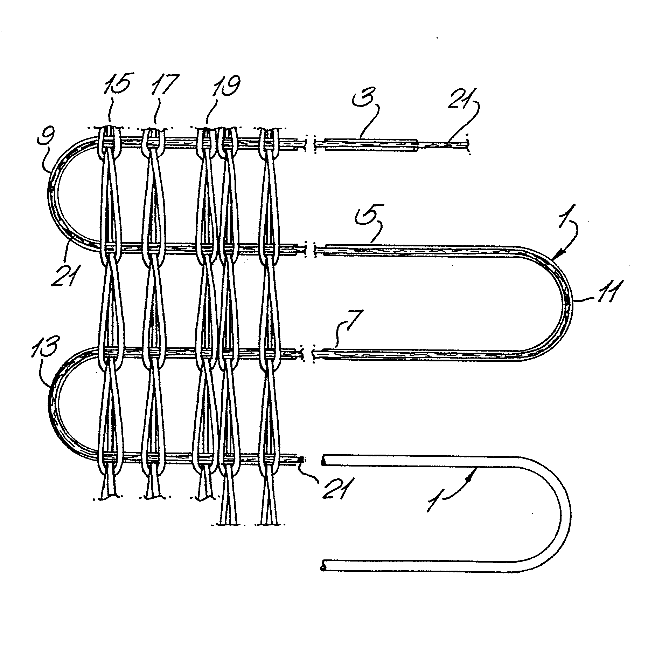

A knitted wire carrier in accordance with the present invention is now described by way of example with reference to the accompanying drawing, which is a partly schematic plan view of part of the carrier.

Referring to the drawing, the carrier shown therein comprises a continuous (with finite limitations) length of wire 1 formed into a zig-zag formation, so as to have a plurality of generally parallel limbs 3, 5, 7, etc., interconnected at alternate ends by arcuate portions 9, 11 and 13, respectively, which define the side edges of the zig-zag. Each of the limbs 3, 5, 7, etc. forms a weft. Knitted into the wefts 3, 5, 7, etc. formed by the zig-zag wire are a plurality of warp threads 15, 17, 19, etc., all in known manner, using a traditional wire carrier knitting machine.

In order to form a locking grid of wefts and warp threads, a second weft thread 21 is fed to the knitting machine with the wire 1, this thread being formed of a 300 Denier vinyl coated polyester, and following the zig-zag formation of wire 1. Furthermore, the warp threads 15, 17, 19, etc, are all formed of a 1000 Denier vinyl coated polyester.

Hence, once the carrier emerges from the knitting machine, the weft thread 21 can be fused or welded to the warp threads 15, 17, 19, etc. by the application of heat. This can be in the form of a stream of hot air, or can be applied in other known manner, e.g. with the aid of a heated roller or bar, or by induction heating of the wire 1.

Obviously, many other constructions apart from that described can be used. For example, instead of using a separate thread 21, it is envisaged that the wire 1 may be coated with a material which can be fused with the material of the warp threads 15, 17, 19, etc.  Likewise, the threads 15, 17, 19, etc. could each be comprised of two different threads, only one of which fuses with the wefts.

Also, it is envisaged that instead of coating the weft thread 21, it could be impregnated.  This could also apply to warps 15, 17, 19, etc.

Also, of course, materials other than 300 and 1000 Denier vinyl coated polyester could be used; it is important, however, that the materials are sufficiently compatible that they wil fuse with the application of heat, but not melt entirely.  Also, it is believed thermoplastic and/or thermosetting materials could be used for the fusible threads.

Of course, the relative sizes of the thread can be chosen as desired, as can the spacing of the wefts and the number of warp threads.

It will of course be understood that the present invention has been described above purely by way of example, and modifications of detail can be made within the scope and spirit of the invention.

CLAIMS

1.      A knitted wire carrier comprising a wire (1) folded into a zig-zag configuration so as to have a plurality of substantially parallel limbs (3,5,7) forming wefts interconnected at alternate ends by arcuate regions (13) and a plurality of warp threads (15,17,19) knitted into the wefts so that there is a knitted knot at each junction between a warp thread (15,17,19) and a weft (3,5,7) characterised in that the location of each junction is fixed by means of an elastomer weld or by fusion of the wefts (3,5,7) to the warp threads (15,17,19).

2.      A knitted wire carrier according to claim 1 characterised in that the wefts (3,5,7) are at least partly formed of or coated with at least one polymeric material which is compatible with the warps (15,17,19).

3.      A knitted wire carrier according to claim 1 or 2 characterised in that the warps (15,17,19) are at least partly formed of or coated with a polymeric material which is compatible with the wefts (3,5,7).

4.      A knitted wire carrier according to claim 1 characterised in that the wefts comprise two threads (1,21) in side-by-side relationship, one of which (21) is formed at least with a coating of, or impregnated with, a polymeric material.

5.      A knitted wire carrier according to claim 4 characterised in that the said one thread (21) is formed entirely of polymeric material.

6.      A knitted wire carrier according to any of claims 2-5 characterised in that the polymeric material is thermosetting.

7.      A knitted wire carrier according to any of claims 2 - 5 characterised in that the polymeric material is thermoplastic.

8.      A knitted wire carrier according to claim 4 characterised in that the warp threads (15,17,19) and the polymeric weft thread (21) are formed of vinyl coated polyesters.

9.      A knitted wire carrier according to any of the preceding claims characterised in that the welds or fusions of the wefts (3,5,7) tõ the warp threads (15,17,19) are formed by heating.

10.      A knitted wire carrier according to claim 9 characterised in that the said welds or fusions are formed by means of a hot air stream.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | GB-A-1 407 412 (SCHLEGEL) * Claim 1; figure 1 * | 1 | D 04 B 21/20 // B 60 R 13/06 |
| Y | FR-A-2 378 117 (VEB GLASSEIDENWERK OSCHATZ) * Claims 1,2 * | 1 | |
| A | | 3,7,9, 10 | |
| A | DE-A-2 930 302 (RÖSLER DRAHT) * Claim 1; page 8, line 28 - page 2, line 8; figures 1-4 * | 1-3 | |
| A | DE-A-3 129 803 (RÖSLER DRAHT) | | TECHNICAL FIELDS SEARCHED (Int. Cl 4) |
| A | FR-A-1 062 276 (ETABLISSEMENTS COUSIN) | | D 04 B B 60 R |

The present search report has been drawn up for all claims

| Place of search | Date of completion of the search | Examiner |
|---|---|---|
| THE HAGUE | 21-05-1985 | VAN GELDER P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82